# FASCICULE DE BREVET EUROPEEN

(11) **EP 2 986 191 B1**
(45) Date de publication et mention de la délivrance du brevet: **10.05.2017**
(21) Numéro de dépôt: 14725222.5
(22) Date de dépôt: 16.04.2014
(51) Int. Cl.: A47J 45/06

(54) **RECIPIENT DE CUISSON COMPORTANT UN CAPTEUR DE TEMPERATURE MUNI D'UN ELEMENT DE FIXATION**
KOCHBEHÄLTER MIT EINEM TEMPERATURSENSOR MIT EINEM BEFESTIGUNGSELEMENT
COOKING CONTAINER COMPRISING A TEMPERATURE SENSOR PROVIDED WITH A FIXING MEMBER

(30) Priorité: 18.04.2013 FR 1353519
(43) Date de publication de la demande: 24.02.2016
(73) Titulaire: SEB S.A., 69130 Ecully (FR)
(72) Inventeur: LINGLIN, Benoît, 74370 Saint Martin Bellevue (FR)
(74) Mandataire: Bourrières, Patrice
(86) Numéro de dépôt international: PCT/FR2014/050921
(87) Numéro de publication internationale: WO 2014/170602

(56) Documents cités:
- EP-A1- 0 931 495
- EP-A1- 2 361 538
- JP-A- H01 145 537
- US-A- 2 968 788
- US-A- 4 277 886
- US-A- 5 441 344

## Description

La présente invention concerne un récipient de cuisson destiné à être disposé sur une plaque de cuisson, un brûleur ou analogue pour la cuisson d'aliments notamment une poêle, une casserole, une sauteuse, un faitout ou un autocuiseur, plus particulièrement un récipient de cuisson comportant un capteur de température.

On connaît du document EP0931495 un récipient de cuisson comportant un fond et une paroi latérale, un capteur de température intégré dans le fond et relié à un circuit électronique pour traiter la grandeur et afficher la température. Le capteur de température et les deux fils conducteurs sont agencés dans une rainure réalisée dans le fond du récipient de cuisson, une plaque perforée étant fixée par frappe à froid sur le fond. Ainsi, le capteur de température est positionné entre la plaque perforée et le fond et peut lors des chauffes et refroidissements successifs du récipient de cuisson s'éloigner du fond et se déplacer de manière aléatoire entre la plaque perforée et le fond. Ainsi, le capteur va mesurer une température comprise entre celle de la plaque perforée et celle du fond alors que dans un tel récipient muni d'un capteur de température, on cherche à mesurer la température du fond. De plus, la résistance thermique du capteur sera plus élevée car le contact du capteur avec le fond n'est pas stable et peut comporter une couche d'air. En conséquence, la température mesurée par le capteur sera imprécise et sa rapidité de réponse sera variable.

La plaque perforée peut également lors des chauffes et refroidissements successifs du récipient de cuisson se décoller légèrement du fond et autoriser des déplacements plus importants du capteur. De plus, si la plaque perforée assure la compatibilité du récipient de cuisson avec un appareil de chauffage par induction, la transmission de la chaleur générée dans la plaque décollée se fera moins bien vers le fond et un point chaud par rapport à la température du fond va apparaitre dans la plaque perforée. Ainsi, si le capteur s'est déplacé contre la plaque perforée, il va mesurer une température beaucoup plus élevée de la plaque perforée par rapport à la température du fond.

Le but de la présente invention est de remédier aux inconvénients précités et de proposer un récipient de cuisson muni d'un capteur de température qui présente un fonctionnement fiable et répétitif, durable dans le temps.

Un autre but de l'invention est de proposer un récipient de cuisson muni d'un capteur de température qui soit de conception simple et économique à mettre en oeuvre.

Ces buts sont atteints avec un récipient de cuisson comportant une calotte comprenant un fond et une paroi latérale, une plaque perforée fixée sur une face externe de la calotte et un capteur de température muni de deux éléments conducteurs isolés et agencés entre la face externe de la calotte et la plaque perforée, lesdits éléments conducteurs s'étendant du fond vers la paroi latérale, caractérisé en ce que le capteur de température est solidaire d'un élément de fixation fixé dans le fond de la calotte.

Ainsi, le capteur de température est immobilisé contre le fond de la calotte. Lors des utilisations successives du récipient de cuisson sur des moyens de chauffe, le capteur de température ne peut pas se déplacer et va mesurer la température du fond de manière répétitive et fiable dans le temps.

De préférence, l'élément de fixation comporte une plaquette de fixation.

Cette disposition permet de fixer indirectement le capteur de température dans le fond par l'intermédiaire de la plaquette de fixation, le capteur de température étant un composant fragile, difficile à fixer sans pièces supplémentaires dans le fond.

Avantageusement, la plaquette de fixation présente une perforation munie d'une lèvre périphérique inclinée encastrée dans la matière du fond.

Cette disposition permet d'obtenir une liaison de la plaquette de fixation dans le fond durable dans le temps. De plus, un tel agencement est très compact.

Avantageusement, l'encastrement de la lèvre périphérique inclinée dans le fond est réalisé par une opération de sertissage.

Cette disposition permet de réaliser la fixation du capteur de température dans le fond de manière extrêmement économique.

De préférence, la perforation est circulaire.

Avantageusement, l'élément de fixation comporte une enveloppe dans laquelle le capteur de température est immobilisé, ladite enveloppe comportant une extrémité munie de la plaquette de fixation.

Cette disposition permet de protéger le capteur de température lors de la fabrication et lors de l'utilisation du récipient de cuisson. On comprend que le capteur de température est maintenu dans l'enveloppe, à proximité immédiate de l'extrémité et de la plaquette de fixation.

De préférence, la plaquette de fixation est fixée à l'enveloppe par soudage.

Cette disposition permet de réaliser la fixation de la plaquette sur l'enveloppe par une opération simple. La soudure permet également de garantir le lien thermique entre la plaquette de fixation et l'enveloppe dans laquelle est agencé le capteur de température.

Avantageusement, l'extrémité de l'enveloppe est écrasée pour former la plaquette de fixation.

Cette disposition permet d'optimiser le cout de fabrication en utilisant une même pièce pour l'enveloppe et la plaquette de fixation et, également, d'assurer une continuité thermique entre la plaquette de fixation et l'enveloppe contre laquelle est maintenu le capteur de température.

De préférence, l'enveloppe est rigide.

Cette disposition permet de faciliter la manipulation du capteur lors du process de fabrication du récipient de cuisson. En effet, on peut réaliser un premier sous-ensemble calotte munie d'une rainure, plaque perforée et un deuxième sous-ensemble capteur de température muni des éléments conducteurs, enveloppe et plaquette de fixation; le deuxième sous-ensemble étant inséré dans la rainure du premier sous-ensemble puis la plaquette de fixation étant sertie dans le fond.

Avantageusement, l'enveloppe est constituée d'un acier inoxydable.

Avantageusement, le capteur de température est une CTN ou un thermocouple.

Par CTN, on comprend une thermistance à Coefficient de Température Négatif.

De préférence, l'article culinaire est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'un récipient selon un mode particulier de réalisation de l'invention.
- La figure 2 illustre une vue en perspective du dessous d'une plaquette de fixation rapportée sur une enveloppe contenant un capteur de température du récipient de cuisson.
- La figure 3 illustre une vue en perspective du dessous d'une plaquette de fixation réalisée par frappe de l'enveloppe contenant un capteur de température du récipient de cuisson.
- La figure 4 illustre une vue schématique en coupe d'un capteur de température agencé dans une enveloppe et une plaquette de fixation rapportée suivant la ligne IV - IV illustrée à la figure 2.
- La figure 5 illustre une vue schématique en coupe d'un capteur de température agencé dans une enveloppe, la plaquette de fixation étant issue de l'enveloppe suivant la ligne V - V illustrée à la figure 3.
- La figure 6 illustre une vue schématique de la plaquette de fixation du capteur de température, agencée entre le fond et la plaque perforée, avant sa fixation dans le fond suivant la ligne VI - VI illustrée à la figure 1.
- La figure 7 illustre une vue schématique en coupe de la plaquette de fixation du capteur de température, sertie dans le fond suivant la ligne VI - VI illustrée à la figure 1.

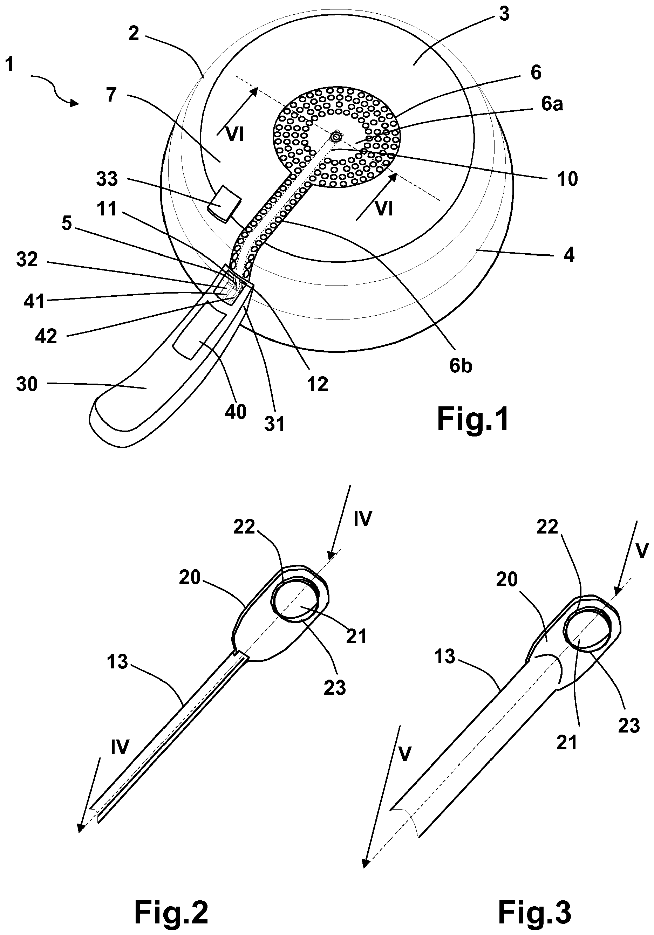

Selon un mode de réalisation visible à la figure 1, un récipient de cuisson 1 comporte une calotte 2 comprenant un fond 3 et une paroi latérale 4. Le récipient de cuisson 1 comporte une plaque perforée 6 fixée sur une face externe 7 de la calotte 2 et un capteur de température 10 muni de deux éléments conducteurs 11, 12 isolés. Le capteur de température 10 et les deux éléments conducteurs 11, 12 sont agencés dans une rainure 5, entre la face externe 7 de la calotte 2 et la plaque perforée 6. Les éléments conducteurs 11, 12 sont reliés électriquement à un circuit électronique 40 pour traiter la grandeur mesurée par le capteur de température 10 et afficher la température. Le capteur de température 10 est agencé sensiblement au centre du fond 3 et les éléments conducteurs s'étendent radialement depuis le centre du fond 3 vers la paroi latérale 4. La plaque perforée 6 comporte une partie circulaire 6a qui recouvre le capteur de température ainsi qu'une partie centrale de la face externe 7 de la calotte 2 et une partie allongée 6b qui recouvre les éléments conducteurs 11, 12 et qui s'étend radialement vers la paroi latérale 4.

Le récipient de cuisson 1 comporte une poignée 30 dont une extrémité 31 est fixée sur la paroi latérale 4 par des moyens de fixation (non représentés sur les figures). Le circuit électronique 40 est agencé dans la poignée 30 et est relié électriquement aux éléments conducteurs 11, 12 par deux bornes 41, 42. L'extrémité 31 de la poignée 30 comporte un logement 32 dans lequel les éléments conducteurs 11, 12 sont reliées aux bornes 41, 42, par exemple par soudage. Le logement 32 est fermé par un capot 33 (représenté en écorché sur la figure 1).

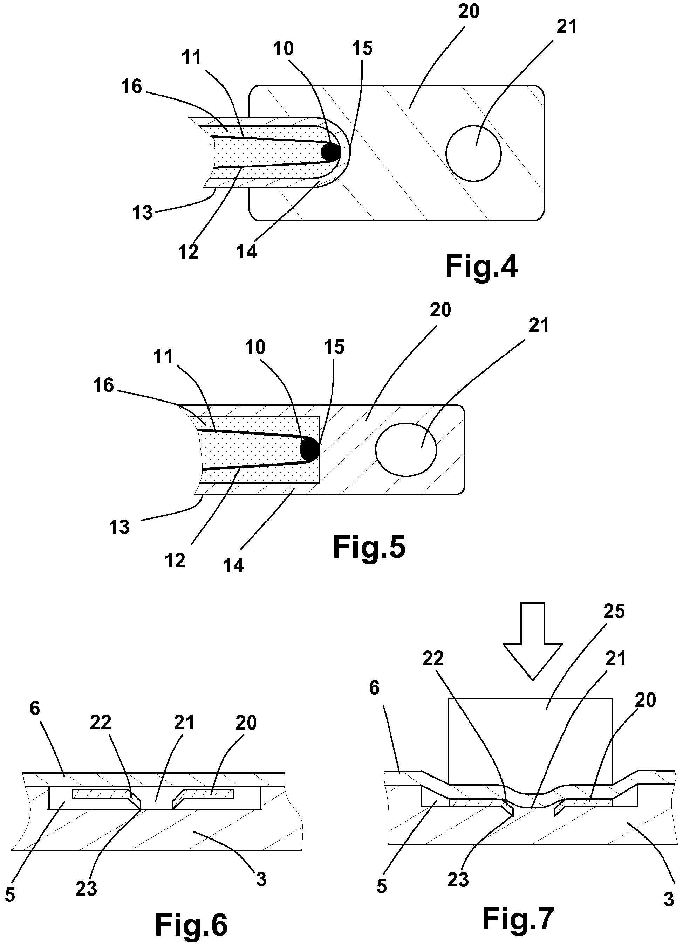

Conformément aux figures 2 à 5, le capteur de température 10 et les éléments conducteurs 11, 12 sont agencés dans une enveloppe 13 tubulaire. L'enveloppe 13 présente une section transversale aplatie, sensiblement oblongue. L'enveloppe 13 est de préférence rigide et elle est constituée d'un acier inoxydable. L'enveloppe 13 comporte une paroi 14 et une extrémité 15. Le capteur de température 10 est positionné dans l'extrémité 15 de l'enveloppe 13, contre la paroi 14. Une poudre minérale 16 isolante entoure et maintient en position les éléments conducteurs 11, 12 et le capteur de température 10. Les éléments conducteurs peuvent être aussi recouverts d'un isolant PTFE. L'extrémité 15 de l'enveloppe comporte une plaquette de fixation 20. Dans le mode de réalisation illustré aux figures 2 et 4, la plaquette de fixation 20 est rapportée sur l'extrémité 15 de l'enveloppe 13 par soudage. Dans le mode de réalisation illustré aux figures 3 et 5, la plaquette de fixation 20 est réalisée par aplatissement de l'extrémité 15 de l'enveloppe 13 tubulaire. Une soudure est réalisée à la jonction de l'enveloppe 13 et de la plaquette 20 de fixation pour garantir l'étanchéité au niveau du capteur de température 10. Le capteur de température 10 et les éléments conducteurs 11, 12 agencés dans l'enveloppe 13 et la plaquette de fixation 20 forment un sous-ensemble capteur.

Tel que visible aux figures 6 et 7, la plaquette de fixation 20 est façonnée pour comporter une perforation 21 circulaire qui présente une lèvre 22 périphérique de forme conique et une extrémité de lèvre 23. La figure 6 illustre la plaquette de fixation 20 ainsi façonnée agencée dans la rainure 5 du fond 3, sous la plaque perforée 6. La lèvre 22 de la perforation 21 forme une proéminence dirigée vers le fond 3. La figure 7 illustre la plaquette de fixation 20 sertie par matriçage par un poinçon 25. Lors du sertissage, le redressement de la lèvre 22 et de l'extrémité de lèvre 23 associé au fluage de matière du fond 3 dans la perforation 21 réalise un ancrage de la plaquette de fixation 20 dans le fond 3.

La calotte 2 du récipient de cuisson 1 illustrée à la figure 1, est réalisée à partir d'un disque d'aluminium d'épaisseur comprise entre 2 et 6 millimètres. La rainure 5, s'étendant radialement depuis le centre du disque, est réalisée par une opération de frappe pour former un logement de réception du sous-ensemble capteur. La rainure 5 est dimensionnée pour recevoir le capteur de température 10 muni des deux éléments conducteurs 11, 12 sans les détériorer.

La plaque perforée 6 et le sous-ensemble capteur sont agencés sur le disque de manière à ce que le sous-ensemble capteur soit positionné dans la rainure 5 puis la plaque perforée 6 est fixée sur le disque par une opération de frappe. Pour comprendre le procédé de fixation de la plaque perforée 6 sur le disque, on se rapportera à la description des brevets français FR 2693894 et FR 2 711 051. Le disque ainsi muni de la grille perforée 6 et du sous-ensemble capteur est mis en forme par une opération de frappe pour constituer le disque 2 du récipient de cuisson 1.

La calotte 2 peut être également une pièce de fonderie en aluminium. Dans ce cas, la rainure 5 est prévue au moulage. L'épaisseur de la calotte en fonderie peut être plus épaisse et comprise entre 5 et 10mm.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la plaque perforée 6 pourra posséder un diamètre proche du diamètre du fond 3 et ainsi être adaptée à fonctionner sur un appareil de chauffage à induction.

Dans une autre variante de réalisation, le capteur de température peut être agencé sur le fond (3) de manière légèrement décentrée, par exemple à 50 millimètres par rapport au centre. Dans ce mode de réalisation, la partie circulaire 6a de la plaque perforée 6 peut prendre la forme d'une couronne.

## Revendications

1. Récipient de cuisson (1) comportant une calotte (2) comprenant un fond (3) et une paroi latérale (4), une plaque perforée (6) fixée sur une face externe (7) de la calotte (2) et un capteur de température (10) muni de deux éléments conducteurs (11, 12) isolés et agencés entre la face externe (7) de la calotte (2) et la plaque perforée (6), lesdits éléments conducteurs (10) s'étendant du fond (3) vers la paroi latérale (4), **caractérisé en ce que** le capteur de température (10) est solidaire d'un élément de fixation fixé dans le fond (3) de la calotte (2) et **en ce que** l'élément de fixation comporte une plaquette de fixation (20) présentant une perforation (21) munie d'une lèvre (22) périphérique inclinée encastrée dans la matière du fond (3).

2. Récipient de cuisson (1) selon la revendication 1, **caractérisé en ce que** l'encastrement de la lèvre (22) périphérique inclinée dans le fond est réalisée par une opération de sertissage.

3. Récipient de cuisson (1) selon l'une des revendications précédentes, **caractérisé en ce que** la perforation (21) est circulaire.

4. Récipient de cuisson (1) selon l'une des revendications précédentes, **caractérisé en ce que** l'élément de fixation comporte une enveloppe (13) dans laquelle le capteur de température (10) est immobilisé, ladite enveloppe (13) comportant une extrémité (15) munie de la plaquette de fixation (20).

5. Récipient de cuisson (1) selon la revendication 4, **caractérisé en ce que** la plaquette de fixation (20) est fixée à l'enveloppe (13) par soudage.

6. Récipient de cuisson (1) selon la revendication 4, **caractérisé en ce que** l'extrémité (15) de l'enveloppe (13) est écrasée pour former la plaquette de fixation (20).

7. Récipient de cuisson (1) selon l'une des revendications 4 à 6, **caractérisé en ce que** l'enveloppe (13) est rigide.

8. Récipient de cuisson (1) selon l'une des revendications 4 à 7, **caractérisé en ce que** l'enveloppe (13) est constituée d'un acier inoxydable.

9. Récipient de cuisson (1) selon l'une des revendications 1 à 8, **caractérisé en ce que** le capteur de température (10) est une CTN ou un thermocouple.

10. Récipient de cuisson (1) selon l'une des revendications 1 à 9, **caractérisé en ce qu'**il est une poêle, une casserole, une sauteuse, un faitout ou un autocuiseur.

## Patentansprüche

1. Garbehälter (1) mit Kalotte (2) bestehend aus einem Boden (3) und einer Seitenwand (4), einer Lochplatte (6), die auf einer Außenseite (7) der Kalotte (2) angebracht ist, sowie einem Temperatursensor (10), der mit zwei isolierten Leitelementen (11, 12) ausgestattet ist, die sich zwischen der Außenseite (7) der Kalotte (2) und der Lochplatte (6) befinden, wobei diese Leitelemente (10) sich über den Boden (3) in Richtung Seitenwand (4) erstrecken, **dadurch gekennzeichnet, dass** der Temperatursensor (10) mit einem Befestigungselement verbunden ist, das am Boden (3) der Kalotte (2) angebracht ist, und dass das Befestigungselement eine Befestigungsplatte (20) umfasst, die ein Loch (21) aufweist, das mit einer geneigten kreisförmigen Lippe (22) ausgestattet ist, die im Material des Bodens (3) eingebettet ist.

2. Garbehälter (1) nach Anspruch 1, **dadurch gekennzeichnet, dass** die Einbettung der kreisförmigen geneigten Lippe (22) im Boden durch einen Crimpvorgang entstanden ist.

3. Garbehälter (1) nach einem der vorhergehenden Ansprüche, **dadurch gekennzeichnet, dass** das Loch (21) kreisförmig ist.

4. Garbehälter (1) nach einem der vorhergehenden Ansprüche, **dadurch gekennzeichnet, dass** das Befestigungselement eine Ummantelung (13) umfasst, worin der Temperatursensor (10) arretiert wird, wobei diese Ummantelung (13) ein Ende (15) umfasst, das mit der Befestigungsplatte (20) ausgestattet ist.

5. Garbehälter (1) nach Anspruch 4, **dadurch gekennzeichnet, dass** die Befestigungsplatte (20) an der Ummantelung (13) angeschweißt ist.

6. Garbehälter (1) nach Anspruch 4, **dadurch gekennzeichnet, dass** das Ende (15) der Ummantelung (13) abgeflacht ist, um die Befestigungsplatte (20) zu bilden.

7. Garbehälter (1) nach einem der Ansprüche 4 bis 6, **dadurch gekennzeichnet, dass** die Ummantelung (13) starr ist.

8. Garbehälter (1) nach einem der Ansprüche 4 bis 7, **dadurch gekennzeichnet, dass** die Ummantelung (13) aus Edelstahl besteht.

9. Garbehälter (1) nach einem der Ansprüche 1 bis 8, **dadurch gekennzeichnet, dass** der Temperatursensor (10) ein NTC-Thermistor oder ein Thermoelement ist.

10. Garbehälter (1) nach einem der Ansprüche 1 bis 9, **dadurch gekennzeichnet, dass** es sich um eine Pfanne, einen Kochtopf, eine Sauteuse, einen Schmortopf oder einen Schnellkochtopf handelt.

## Claims

1. Cooking vessel (1) having a cap (2) comprising a bottom (3) and a side wall (4), a perforated plate (6) fixed on an outer face (7) of the cap (2) and a temperature sensor (10) provided with two insulated conducting elements (11, 12) and arranged between the outside (7) of the cap (2) and the perforated plate (6), said conducting elements (10) extending from the bottom (3) towards the side wall (4), **characterised in that** the temperature sensor (10) is integral with a fastening member fixed in the bottom (3) of the cap (2) and **in that** the fastening member comprises an attachment plate (20) having a perforation (21) provided with an inclined peripheral lip (22) embedded in the material of the bottom (3).

2. Cooking vessel (1) according to claim 1, **characterised in that** the inclined peripheral lip (22) in the bottom is embedded in the bottom by a crimping operation.

3. Cooking vessel (1) according to one of the preceding claims, **characterised in that** the perforation (21) is circular.

4. Cooking vessel (1) according to one of the preceding claims, **characterised in that** the fastening element has an envelope (13) in which the temperature sensor (10) is immobilised, said envelope (13) having an end (15) provided with the fastening plate (20).

5. Cooking vessel (1) according to claim 4, **characterised in that** the fastening plate (20) is attached to the envelope (13) by welding.

6. Cooking vessel (1) according to claim 4 **characterised in that** the end (15) of the envelope (13) is crushed to form the fastening plate (20).

7. Cooking vessel (1) according to one of claims 4 to 6, **characterised in that** the envelope (13) is rigid.

8. Cooking vessel (1) according to one of claims 4 to 7, **characterised in that** the envelope (13) is made of stainless steel.

9. Cooking vessel (1) according to one of claims 1 to 8, **characterised in that** the temperature sensor (10) is an NTC thermistor or a thermocouple.

10. Cooking vessel (1) according to one of claims 1 to 9, **characterised in that** it is a frying pan, a pan, a sauté pan, a stewpot or a pressure cooker.
